# EUROPEAN PATENT SPECIFICATION

(11) **EP 1 861 839 B1**
(45) Date of publication and mention of the grant of the patent: **31.08.2016**
(21) Application number: 06709000.1
(22) Date of filing: 10.03.2006
(51) Int. Cl.: G08B 21/18, G05B 23/02, H04L 12/28

(54) **ACCESSORY CONTROLLING AND TRACKING THE OPERATION OF HOUSEHOLD APPLIANCES AND ENTERTAINMENT EQUIPMENT**
DEN BETRIEB VON HAUSHALTSGERÄTEN UND UNTERHALTUNGSGERÄTEN STEUERNDE UND VERFOLGENDE HILFSEINRICHTUNG
CONTRÔLE ACCESSOIRE ET SUIVI DU FONCTIONNEMENT D'APPAREILS MÉNAGERS ET D'ÉQUIPEMENTS DE LOISIR

(30) Priority: 17.03.2005 FI 20050285
(43) Date of publication of application: 05.12.2007
(73) Proprietor: Innohome Oy, 00810 Helsinki (FI)
(72) Inventor: MYLLYMÄKI, Matti, FI-00810 Helsinki (FI)
(74) Representative: LEITZINGER OY
(86) International application number: PCT/FI2006/050096
(87) International publication number: WO 2006/097575

(56) References cited:
- EP-A- 1 115 263
- WO-A1-96/13135
- WO-A1-2004/026708
- JP-A- 2001 054 176
- US-A- 5 793 125
- US-A- 5 815 086
- US-A1- 2002 097 546
- US-A1- 2003 197 617
- US-A1- 2004 093 125
- US-A1- 2004 122 560

## Description

The most serious safety hazards at home are water leaks and fires, the protection against which has been traditionally provided by automation and security systems, as well as by various safety devices. Automation systems involve the use of fire, smoke and leak detectors for monitoring an object under surveillance and, if necessary in the event of an accident, the supply of power or water to the object is discontinued and an alarm is set off. Some domestic electrical appliances also have separate safety devices available, aimed at reducing safety hazards. Such devices include e.g. safety devices attached to a kitchen range, which disconnect the power supply in case the range is in active status for too long at high output or heats up too much, or if a motion detector connected therewith does not register any user activity within a given period of time. Various automatically and manually activated timers are also used for protecting electrical equipment. The most common fire safety device is a statutory smoke alarm, several of which are found in almost every home nowadays. Accessories for data transfer in fire alarms are also available, making use of audio or radio frequencies or real-line communication links.

Appliance-specific solutions are also available for the prevention of water damage. Safeguards for washing machines are provided by using an electrically operated check valve, which is attachable to a water connection and which is controlled either by a washing machine or a separate central processing unit which monitors a wired leak detector placed under the washing machine. A few washing machine and refrigerator manufacturers supply also IP (Internet Protocol) based devices, which are capable of detecting some abnormal conditions regarding the inner workings of such appliances.

The most difficult problem in terms of making automated water and fire security systems more commonplace is a high purchase price, as well as a configuration whose installation for service requires that the solutions be anticipated as early as in the designing stage of a building or that major modifications be made to existing installations. The currently available systems also require a remarkable amount of preparatory planning work, the costs of which may represent a significant portion of the entire venture. For example, connecting water leak detectors and a solenoid valve to the water supply of an existing old facility requires a viable plan, which is based on a preliminary examination of the facility-specific, previously installed solutions and, without exception, calls for major renovation and installation efforts. What is common to commercially available solutions is indeed a significant amount of installation work required thereby, which may cancel the entire project. For example, the installation of a solenoid valve to be connected with the water supply of an apartment can be an almost impossible undertaking, not being anticipated in the construction stage. Accordingly, the commercially available safety solutions are poorly compatible with existing structures.

Another major problem involves inadequate services provided by separate and independent safety devices, as well as lack of interfaces with other equipment. In general, the safety devices only provide on/off data about overstepping a certain limit, but analog information that would enable tracking the status and consumption quantities of an appliance, is not provided thereby. The monitoring of consumption and operation requires traditionally separate devices, even if some of the desired information could be produced by shared sensors. If the objective is to protect a washing machine with regard to eventual fire or water damage and to monitor its operation as well as energy consumption, it is currently necessary to employ a plurality of separate aggregates, which usually still require separate operating and control devices.

Monitoring the condition and operation of electrical household appliances would considerably alleviate safety hazards, yet there are no advantageous solutions available for the time being, nor have independent safety devices a capability of reporting misuse faults or malfunction of a household appliance. The misuse faults also constitute a significant hazard, regarding both fire and water mishaps. Typical problems include switching on a wrong plate on the electric stove or inadvertently leaving it on, resulting often from a poor user interface of the electric stove. Leaving the door of a refrigerator inadvertently open may also lead to water damage, as its inadequate cleaning or thawing may cause overheating and ultimately a fire. Electrical fires are generally characterized by abundant build-up of smoke, whereby a smoke detector and disconnection of power would be efficient means of preventing a fire. A significant precaution would also be the observation of the presence or physical state of users. For example, both water and fire accidents accidents could be prevented by observing the fact that a user leaves the monitored area or falls asleep and by then switching off the appliances, provided that this could be done at a reasonable cost.

A common problem with smart home security solutions is the fact that such solutions do not lend themselves very well except to new buildings, in which the demands have been taken into consideration as early as in the designing stage. The configuration of smart home systems is also such that the sensors and actuators thereof at the bottom level of the system are merely technical sites and addresses, which must be defined for what they are and what they are related to and what they are used for, which is why the configuration of an entire system requires a separate designing and programming process. Often, the intelligence and controls, as well as measurements of a system are also highly centralized, the direct control and measuring of appliances demanding a separate cable system. The same applies to new IP-based household appliances, which require a local area network infrastructure for functioning. There is almost nothing available in terms of identifying the status and tracking the operation of individual household appliances, because the current system solutions do not support such services. Neither do the IP-based home appliances recognize changes, such as water leaks, occurring in the operating environment, and thus far such appliances are limited with regard to safety aspects thereof, as well as expensive with regard to services provided thereby. A problem in data transfer equipment integrated or connected with smoke and water-leak alarms is the price and incompatibility, as well as the lack of a control interface for home appliances.

EP 1115263 shows a household appliance control network system where the control intelligence is centralized in a control unit from which each of the appliances receives its necessary operation data through the network. There is no accessory of the appliance which is attachable to an operating energy or water supply of the appliance.

US2004/093125 relates to an apparatus for (and method of) power management control of a compressor based appliance such as a refrigerated vending machine. In order to reduce electrical power consumption of the appliance, the power input port of the appliance is automatically decoupled from a power source in response to control signals provided by sensors. When the predetermined set of conditions are satisfied, the power input port of the appliance is automatically coupled to the power source after expiration of a shutdown time period. A bank of appliances can be controlled by forwarding sensor status information of a master controller to slave controllers controlling the appliances. There is no independent adaptation of the controllers to the signals of both the appliances connected with the controllers and of the operating environment. Therefore the application of use of the controllers is limited.

JP 2001054176 shows a power control system for home electric appliances. A plurality of electric appliances are connected in parallel with a power distribution line which is connected to a power line of commercial AC power supply via a power controller. There are sensors to sense the operating status of each electric appliance. Information sensed by the sensors is stored and a processing unit calculates the operating state and the amount of power consumption of each electric appliance to predict a standard operating pattern, on the basis of which the power controller controls the drive of each electric appliance. This centralized power supply control has no appliance-specific adaptation to the operating environment.

WO 2004/026708 discloses a system where various sensors control water consumption in order to limit or shut off the water supply in response to sensing a malfunction through one or more of the sensed parameters (water leak, water level, temperature and pressure). The parameters have pre-set limits without any adaptation to the combination of signals.

The subsequently described invention overcomes the above problems and drawbacks in such a way that the existing home appliances can be protected with respect to both water and fire accidents, as well as failures and misuse faults, by means of a simple accessory attachable to a power and water connection. The accessory identifies the status of an appliance linked thereto and that of its environment on the basis of a standard audio alarm or other known communication provided by its own existing sensors, as well as by independent smoke, gas, carbon monoxide, overheating and water-leak alarm devices. The accessories monitor also the condition of a user by tracking operating data provided by other peripherals. By means of fixed and wireless sensors, the accessory monitors the energy, water consumption as well as the ambience of an appliance attached thereto, and also uses the information obtained thereby for independently controlling both water and service energy connections. By virtue of the invention, the peripheral alarms may comprise presently existing or economical standard solutions without demanding a separate cable system. By virtue of a dedicated smartness of the accessory, there is no need for a separate central processing unit, operating panels or planning process, either. By virtue of the inventive solution, the accessory can also be installed within a few minutes and is able to detect abnormal conditions without a more extensive automation or security system, as well as to control and supervise independently the operation of an appliance connected thereto.

The accessory is also capable of learning the power and/or water consumption, as well as the active cycles of an appliance connected thereto, and begins to monitor the same. Upon detecting a significant deviation, it produces a local or distant alarm by using prior known data transfer solutions. Making use of the data transfer, the accessories are capable of interactive dialog and, if necessary, with a home automation and security system, yet function independently in control incidents which require a quick response. Thus, for example, the presence of a user can be transmitted by a home/away switch placed at the doorway and the state of sleep by a bed sensor, or both by means of a portable smart bracelet capable of identifying presence and sleep and communicating in a wireless fashion. The status data is transmitted non-urgently by prior known data transfer and the actual high-speed operative control can be performed on site. The active presence of a user can also be verified by monitoring the use of electrical equipment and water, as well as by transmitting the information to other peripherals by way of interactive communication therebetween.

The invention provides also a safety precaution by upgrading and simplifying the user interfaces of household appliances. For example, a kitchen range can be protected from being misused by children or demented persons in such a way that the activated status of a range ventilator light or a fan is used for controlling the range. Thus, the range is only connected to power supply when the range ventilator is on. At the same time, a light and audio signal is obtained, indicating when the range is in operation, nor is it so likely to be left inadvertently in active status, and the user can be sure that the range is inactivated whenever he/she turns off the range ventilator. When a person is leaving the apartment or going to bed, the accessories of the invention make it possible to provide a reminder of the active status of themselves before being disconnected from power supply by the automation. Reminding automatically about the soiling of the condenser of a refrigerator or freezer, about excessive build-up of ice or about the door left ajar is possible by means of the invention, thus reducing a fire hazard and conserving energy, as well as avoiding rapid wearing of the machinery. The occupant need not worry about the faucet of a dishwasher and washing machine as it turns on and off automatically by means of the invention. With respect to entertainment equipment, the invention can be used for indicating when the occupant is watching television or a DVD movie and for controlling the lighting automatically.

What is novel about the invention in technical sense is that, a piece of the operation control intelligence, traditionally located in a separate central processing unit, a piece enabling an independent intelligent activity, is assigned to an accessory which can be readily connected with the operating environment of an appliance to be controlled. Consequently, all information regarding the operation and operating environment of an appliance under control is readily available and enables the tracking and control of an appliance-specific, independent activity, as well as connecting the same intelligently with a more extensive configuration. The more extensive configuration, comprising several accessories, may function either as an independent pico-network and/or as a segment in a smart home system. A pico-network is something that enables a direct interactive communication between smart accessories and makes use of the interactively refined functional information without centralized extra intelligence. The accessories targeted for various household appliances are preprogrammed with desired functions and are able to identify also other peripheral equipment as well as to adapt themselves thereto, there being no need for preliminary planning or functional programming or system configurating. The accessory adapts itself also to the alarm sounds of existing alarm devices, which can thus be exploited in the system. The required installation work is also minimal with no need to touch existing fixed installations or to include any additional cable system. Because of its technical structure, the invention also enables using the accessory in all domestic appliances regardless of whether these operate on water, electricity or gas. Even in appliance-specific sense, the independent accessory of the invention provides more comprehensive safety solutions, as well as new services which cannot be achieved even by traditional automation and security systems with their numerous sensors and control units. The inventive technical solution also enables building a smart home based on existing previously installed facilities from appliance to appliance, beginning with independent accessories and progressing as necessary in such a way that the malfunction, consumption and alarm information of household appliances are ultimately linked with a more extensive automation or security system. The operating data of home appliances or entertainment electronics can also be exploited in the verification of users' presence and active condition, whenever it is desirable to control e.g. burglar surveillance or lighting automatically or to monitor a person's activity status in automated alarms regarding health or passivity.

The invention will now be described in more detail with reference to the accompanying drawings, in which:
- Fig. 1: shows an accessory of the invention in a structural block diagram,
- fig. 2: shows how accessories of the invention operate in connection with a washing machine, and
- fig. 3: shows how accessories of the invention operate in connection with a kitchen range and a range fan.

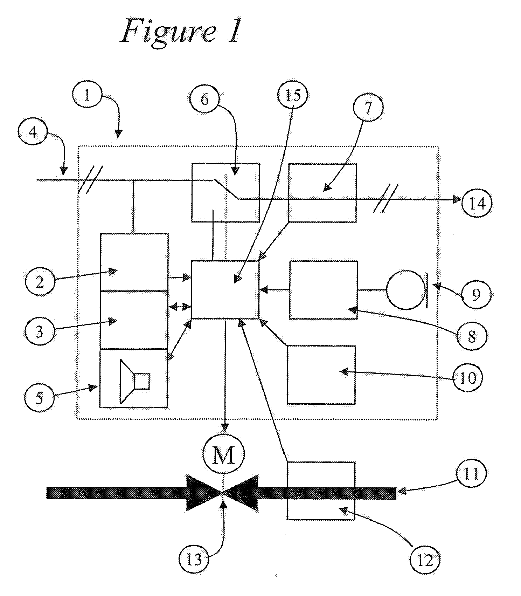

In reference to fig. 1, there is shown a block diagram for an accessory 1 of the invention, the accessory having its internal blocks within a dashed line and outside the latter are blocks intended for controlling water or gas, as well as for measuring a flow rate. The accessory houses a processor or a control logic 15, receiving its operating energy from a power supply 4 by way of a voltage source 2. The processor 15 monitors the ambient peripheral alarms by means of a microphone 9 and a sound detection circuit 8 or a communication unit 3 associated therewith, as well as the status of an appliance under control by measuring 7 an electric power 14 claimed thereby. Upon activating the accessory, the processor 15 adapts itself to the standard audio alarm envelopes of leakage, fire and overheating alarm devices, the latter thus needing no additional coding or communication equipment. The processor 15 monitors also a flow rate 11 of water or gas by means of a flow rate sensor 12. Measuring both the flow rate 12 of water or gas and the electrical energy claimed by the appliance is effected by using temperature sensors, the reference point therefor being constituted by a sensor 10 which measures temperature outside the appliance. The flow rate 11 of water or gas energy effects cooling of the sensor with respect to the reference temperature 10 whenever there is a flow, and the electrical energy claimed by the appliance in turn effects warming of the sensor 7 with respect to the reference temperature 10. A measurement of the energy claimed by the appliance can also be effected by some other prior known measuring method. The rate of water or gas flow, as well as that of electric power, is indicated by the magnitude of temperature change. The processor 15 learns the normal active cycles and the energy as well as water consumption of an appliance connected therewith and keeps tracking operation of the appliance on the basis of this information or data otherwise supplied therein. Upon detecting anything abnormal in the operation of an appliance connected therewith or upon identifying an alarm produced by an external alarm sensor, it guides the appliance to a status appropriate in view of a particular condition. In addition to illustrated control outputs 13, 6, the accessory may have also other control signals regarding an appliance under control, or it may practice control by way of the communication unit 3. The simultaneous tracking of several different ambient variables and the mutual correlation thereof enables a considerably more effective detection of exceptional conditions than what is achieved by traditional methods based on the threshold values of individual signals. The control of power supply for a controlled appliance can be effected by using a relay 6 or an electronic switch, such as a FET or Triak. The control of water or gas for a controlled appliance is effected by using a motor-driven or solenoid valve 13. In its simplest form, the local user interface can be a pilot light or a speaker or buzzer 5, by way of which can be released an alarm or status information, another feasible device being an LCD display with its control button. For the purpose of telecommunication, the accessory is provided with the communication unit 3 based on prior known data transfer solutions, which may be using e.g. an electricity main, radio frequencies or a local area network. It can be used for programming the appliance and parameters regarding its activity can be transmitted from other peripherals, a remote operating panel, or by way of an automation or security system. The status, fault and consumption data regarding an appliance under control can be transmitted forward by means of data transfer.

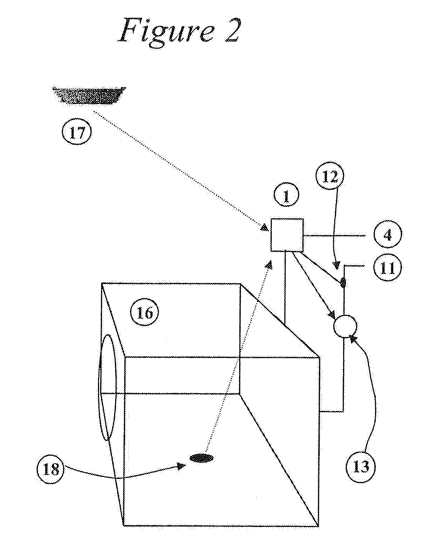

Fig. 2 shows an accessory of the invention working in connection with a washing machine. An accessory 1 is connected to the supply of power 4 and water 11 for a washing machine 16. The washing machine has its operating environment further provided with independent smoke and leak detectors 17 and 18, respectively. The washing machine has its water supply provided with a motor-driven valve 13 and a flow rate sensor 12, which enable the tracking of water consumption and the control of a water connection. On the basis of a power claimed by the washing machine, the accessory 1 senses when the washing machine is active and switches on the motor-driven valve 13 present in water supply and retains it open throughout the washing cycle. When the washing cycle is completed, it closes the valve after a short delay as the washing machine stops. During that delay, the accessory uses the water flow rate sensor 12 to examine the washing machine for a leak which is not indicated by a leak sensor placed under the washing machine. The leak detector serves to indicate a water leak outside the washing machine, and the accessory identifies its alarm sound and closes the water and power connection. The same happens as the smoke alarm 17 sets off an alarm. The accessory 1 learns the normal active periods, as well as the water and power consumption of a washing machine and monitors operation of the appliance on the basis of this information or data supplied therein. Upon detecting anything abnormal in the operation of an appliance or upon identifying an alarm produced by an external alarm sensor, it guides the appliance to a status appropriate in view of a particular power supply and water condition and produces either a local or remote alarm by way of its data transfer links. Such conditions include for example a partial clogging of the drain filter or a deflection of the hose, whereby the machine does not manage a proper draining of water, nor is an alarm produced by the washing machine's own fault diagnostics. Also, a malfunction of the timer mechanism and thermostat can be detected and an alarm given. In its simplest form, the accessory reports the washing cycles of a washing machine on a remote operating panel or a smart bracelet, advising the user that a wash is completed and not to leave the laundry to wrinkle in the basket.

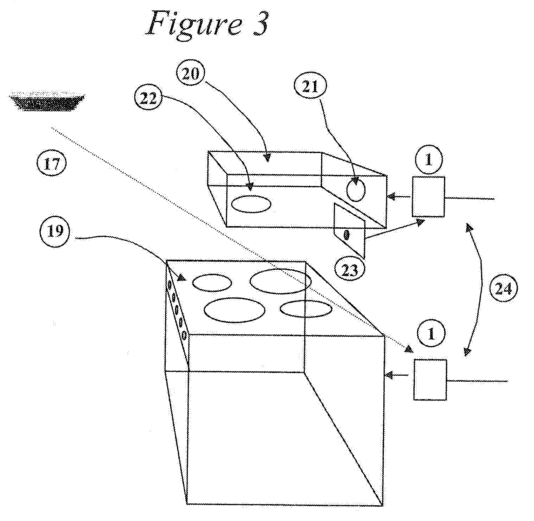

Fig. 3 shows an accessory of the invention working in connection with an electric or gas range and a range ventilator. A range 19 and a range ventilator 20 are provided with separate accessories 1 in communication with each other by way of a mains modem 23. The range accessory 1 recognizes when the range is active and communicates 23 the information to the range ventilator accessory 1, which switches a fan 21 and a lamp 22 on and switches the same off when the range is turned off. Thus, upon seeing the light and hearing the sound, the user knows when the range is active and hence is less likely to leave it on. The automatic control of a range ventilator also improves the quality of indoor air, because it always switches on automatically. The facility which houses the range is also provided with a smoke alarm 17, the range accessory 1 identifying its alarm sound and switching off the range operating energy as the smoke alarm is set off, whereby the smoldering material forgotten on a plate does not have time to catch fire. A temperature sensor 23 external of the range ventilator accessory, together with the range accessory 1, controls the power claimed by the range in relation to its radiation temperature 23 and, when the relation deviates sufficiently from what is normal, the range accessory switches the operating energy off of the range. Thus, a single plate at high output, with food simmering on top of it, does not switch off within an excessively long period as opposed to what happens with traditional range safety devices. Yet, if a plate of the range is vacant, its power supply can also be cut off considerably sooner than in traditional solutions. The temperature sensor 22 external of the range ventilator accessory and the operating power measured by the range accessory 1 are also used for controlling the speed of the range ventilator, raising it as the temperature or the power communicated 19 by the range is rising, the ventilation demand adjusting itself automatically according to the operating condition. By way of a data transfer link, on the basis of information regarding a user's presence or state of sleep and provided by a home/away switch and a bed sensor or a smart bracelet, the accessory 1 also switches the range automatically off, if necessary. When the user leaves the apartment or falls asleep, the range accessory may provide a reminder of its active status on a remote operating panel or a smart bracelet, which may reveal it as a voice or text message before the range is automatically switched off. The range operating data can also be used for tracking the activity of occupants and particularly when analysing the independence of demented persons.

## Claims

1. A system suitable for controlling or tracking the operation of household appliances or computer or entertainment equipment (subsequently appliance), comprising an appliance-specific accessory (1), which is located in connection with an appliance either as a separate unit or as a portion of the controlled or monitored appliance and which is attachable to an operating energy and/or water supply (4, 11) of the appliance, and which includes connections (3, 9) for sensors monitoring either a user's presence or activity status or an operating environment or wired connections (7, 12) for signals tracking a flow rate of water or energy consumption, and a processor or a control logic (15) for processing information received by way of said connections, and control outputs for controlling (6, 13) the operation or operating energy or water of an appliance, or control signals for local (5) or remote (3) communication, the accessory is configured to monitors
1) the operating status of an appliance connected therewith on the basis of energy consumed thereby (measurement 7) or a water flow rate (measurement 12) or temperature and
2) the signal of an accessory linked functionally with the operating environment of the appliance, such as the signal of a leak (18), smoke (17), carbon monoxide, gas or temperature sensor (23) or other operating status related signal or a user's activity status or presence,
characterized in_that the appliance-specific accessory (1) of the system is configured to
a) independently adapt itself to the signals of both the appliance connected therewith and other accessories or peripheral sensors of the operating environment,_said signals including normal active cycles and consumption of energy or energy and water of the appliance and verification of active presence of a user by monitoring the use of the appliance, and on the basis of said adaptation said appliance-specific accessory is configured to perform a control of the appliance's operating status in such a way that it guides automatically the appliance's energy (4) or water (11) supply or activity (21, 22) to a predetermined operating status, and
b) identify signals or inter-signal relationships of the appliance connected therewith and accessories linked with its operating environment, such as peripheral sensors or similar other accessories (1), by tracking the conditions resulting from a normal or incorrect use or a malfunction of the appliance and, on the basis of such identification, control operation of the appliance and/or the peripherals or to communicates information about said conditions locally or by way of data transfer links from the operating facility to desired parties,
whereby the accessory (1) is adapted to prepare a user interface capable of self-control according to ambient conditions and the operating status of the appliance connected therewith.

2. A system_as set forth in claim 1, **characterized in that** the system includes interconnected appliances which are capable of controlling directly the operation of each other according to information from their peripheral sensors and according to a user's activity or presence.

3. A system_as set forth in any of claims 1 or 2, **characterized in that** the system is provided with several accessories (1), which communicate with each other, and that, by monitoring changes in the operating states of appliances occurring as a result of a user's actions, such accessories are capable of indicating the user's presence or activity.

4. A system_as set forth in any of claims 1-3, **characterized in that** the system_is provided with several accessories (1), which communicate with each other by comparing the water consumption of water using appliances and an entire supply line as well as the presence of users, and are capable of indicating, on the basis of analysed information, a leak, a leaking or left-open water point external of home appliances.

5. A system_as set forth in any of claims 1-5, **characterized in that** the accessory has its sound detector (9, 8) used for shell protection or for monitoring the operating status of an appliance or the activities of occupants.

6. A system_as set forth in any of claims 1-5, **characterized in that** the standard alarm sound of independent peripheral sensors (17) is used for signalling.

7. A system_as set forth in any of claims 1-6, **characterized in that** tracking the energy or water consumption of appliances is effected by using a temperature measurement.

8. A system_as set forth in any of claims 1-7, **characterized in that** the accessory (1) is adopted to measures ambient conditions by two separate temperature sensors (7 or 12 or 23 and 10) and to effects control based on a temperature difference.

9. A system_as set forth in any of claims 1-8, **characterized in that** its user interface comprises an LCD display with its control button or a pilot sound.

## Patentansprüche

1. System, das für das Steuern oder Verfolgen des Betriebs von Haushaltsgeräten oder Computern oder Geräten der Unterhaltungselektronik (anschließend Anwendung) geeignet ist, umfassend ein anwendungsspezifisches Zubehör (1), das in Verbindung mit einer Anwendung entweder als eine separate Einheit oder als ein Teil der gesteuerten oder überwachten Anwendung ausgeführt ist, und das an eine Antriebsenergie und/oder Wasserversorgung (4, 11) von der Anwendung anschließbar ist und Verbindungen (3, 9) für Sensoren umfasst, die entweder eine Anwesenheit oder einen Aktivitätsstatus eines Benutzers oder eine Betriebsumgebung oder verdrahtete Verbindungen (7, 12) für Signale, die eine Durchflussmenge von Wasser oder einen Energieverbrauch nachverfolgen, überwachen, und einen Prozessor oder eine Steuerlogik (15) zum Verarbeiten von Informationen, die mittels der Verbindungen empfangen werden, und von Steuerausgängen zum Steuern (6, 13) des Betriebs oder der Antriebsenergie oder des Wassers einer Anwendung, oder von Steuersignalen für lokale (5) oder entfernte (3) Kommunikation, wobei das Zubehör konfiguriert ist, Folgendes zu überwachen
1) den Betriebszustand einer Anwendung, die damit verbunden ist, basierend auf der dabei verbrauchten Energie (Messung 7) oder einem Wasserdurchfluss (Messung 12) oder einer Temperatur und
2) das Signal eines Zubehörs, das funktionell mit der Betriebsumgebung der Anwendung verbunden ist, wie beispielsweise das Signal einer Leckstelle (18), von Rauch (17), Kohlenmonoxid, eines Gas- oder Temperatursensors (23) oder eines anderen mit einem Betriebszustand verbundenen Signals oder einen Aktivitätsstatus oder eine Anwesenheit eines Benutzers,
**dadurch gekennzeichnet, dass** das anwendungsspezifische Zubehör (1) des Systems konfiguriert ist,
a) sich unabhängig voneinander an die Signale von sowohl der Anwendung, die damit verbunden ist, als auch von anderem Zubehör oder peripheren Sensoren der Betriebsumgebung anzupassen, wobei die Signale normale Aktivitätszyklen und den Verbrauch von Energie oder Energie und Wasser der Anwendung und das Überprüfen der aktiven Anwesenheit eines Benutzers durch Überwachen des Verwendens der Anwendung umfassen, und wobei basierend auf der Anpassung das anwendungsspezifische Zubehör konfiguriert ist, eine Steuerung des Betriebszustandes der Anwendung derart auszuführen, dass es automatisch die Energie- (4) oder Wasser- (11) -Versorgung oder die Aktivität (21, 22) der Anwendung zu einem vorbestimmten Betriebszustand führt, und
b) Signale oder Zwischensignalbeziehungen der Anwendung, die damit verbunden ist, und von Zubehör, das mit ihrer Betriebsumgebung verknüpft ist, wie beispielsweise periphere Sensoren oder ähnliches anderes Zubehör (1) durch Nachverfolgen der Zustände, die sich aus einer normalen oder falschen Verwendung oder einer Fehlfunktion der Anwendung ergeben zu identifizieren und basierend auf dieser Identifikation Betrieb der Anwendung und/oder der Peripheriegeräte zu steuern oder um Informationen über die Zustände lokal oder mittels Datenübertragungsverbindungen von der Betriebsstätte zu gewünschten Parteien zu kommunizieren, wobei das Zubehör (1) ausgeführt ist, eine Benutzeroberfläche darzustellen, die fähig ist, sich gemäß Umgebungsbedingungen und des Betriebszustands der Anwendung, die damit verbunden ist, selbst zu steuern.

2. System nach Anspruch 1, **dadurch gekennzeichnet, dass** das System miteinander verbundene Anwendungen umfasst, die fähig sind, den Betrieb voneinander direkt gemäß Informationen von ihren peripheren Sensoren und gemäß einer Aktivität oder Anwesenheit eines Benutzers zu steuern.

3. System nach einem der Ansprüche 1 oder 2, **dadurch gekennzeichnet, dass** das System mit mehreren Zubehören (1) ausgestattet ist, die miteinander kommunizieren, und dass durch das Überwachen von Änderungen in den Betriebszuständen von Anwendungen, die infolge von Aktionen eines Benutzers erfolgen, dieses Zubehör fähig ist, die Anwesenheit oder Aktivität des Benutzers anzeigen.

4. System nach einem der Ansprüche 1 bis 3, **dadurch gekennzeichnet, dass** das System mit mehreren Zubehören (1) ausgestattet ist, die miteinander durch Vergleichen des Wasserverbrauchs von Wasser verwendenden Anwendungen und von einer gesamten Versorgungsleitung sowie der Anwesenheit von Benutzern zu kommunizieren, und die fähig sind, basierend auf analysierten Informationen eine Leckstelle, einen leckenden oder offen gelassenen Wasserpunkt außerhalb von Haushaltsgeräten anzuzeigen.

5. System nach einem der Ansprüche 1 bis 5, **dadurch gekennzeichnet, dass** das Zubehör seinen Luftschallmelder (9, 8) für den Außenschutz oder zum Überwachen des Betriebszustandes einer Anwendung oder der Aktivitäten von Bewohnern verwendet.

6. System nach einem der Ansprüche 1 bis 5, **dadurch gekennzeichnet, dass** der Standardalarmton von unabhängigen peripheren Sensoren (17) zum Signalisieren verwendet wird.

7. System nach einem der Ansprüche 1 bis 6, **dadurch gekennzeichnet, dass** das Verfolgen des Energie- oder Wasserverbrauchs von Anwendungen mittels Verwenden einer Temperaturmessung bewirkt wird.

8. System nach einem der Ansprüche 1 bis 7, **dadurch gekennzeichnet, dass** das Zubehör (1) ausgeführt ist, Umgebungsbedingungen durch zwei getrennte Temperatursensoren (7 oder 12 oder 23 und 10) zu messen und eine Steuerung basierend auf einer Temperaturdifferenz zu bewirken.

9. System nach einem der Ansprüche 1 bis 8, **dadurch gekennzeichnet, dass** seine Benutzeroberfläche ein LCD-Display mit Steuertaste oder einem Pilotton umfasst.

## Revendications

1. Système approprié pour contrôler et suivre le fonctionnement d'appareils ménagers ou d'ordinateurs ou d'équipements de loisirs (ci-après appelés appareil), comprenant un accessoire spécifique à l'appareil (1), lequel est installé en connexion avec un appareil, en tant qu'unité séparée ou que partie de l'appareil contrôlé ou surveillé, et lequel est apte à être relié à une source d'énergie et/ou d'eau de fonctionnement (4, 11) de l'appareil, et lequel comprend des connexions (3, 9) pour des capteurs surveillant la présence d'un utilisateur ou un statut d'activité ou un environnement opérationnel ou des connexions câblées (7, 12) pour des signaux traçant un débit d'eau ou une consommation d'énergie, et un processeur ou une logique de contrôle (15) destiné(e) à traiter des informations reçues par le biais desdites connexions, et des sorties de contrôle pour le contrôle (6, 13) du fonctionnement ou de l'énergie ou de l'eau fonctionnelle d'un appareil, ou des signaux de contrôle pour une communication locale (5) ou à distance (3), l'accessoire étant configuré pour surveiller
1) l'état de fonctionnement d'un appareil relié à celui-ci, sur la base de l'énergie consommée par ce dernier (mesure 7) ou un débit d'eau (mesure 12) ou une température, et
2) le signal d'un accessoire relié fonctionnellement à un environnement opérationnel de l'appareil, tel que le signal d'un capteur de fuite (18), de fumée (17), de monoxyde de carbone, de gaz ou de température (23), ou un autre signal relatif à l'état de fonctionnement, ou un statut d'activité ou une présence d'un utilisateur,
**caractérisé en ce que** l'accessoire spécifique à l'appareil (1) du système est configuré pour
a) s'adapter automatiquement aux signaux de l'appareil relié à celui-ci et d'autres accessoires ou capteurs périphériques de l'environnement opérationnel, lesdits signaux comprenant des cycles d'activité normale et la consommation d'énergie ou d'énergie et d'eau de l'appareil, et la vérification d'une présence active d'un utilisateur en surveillant l'utilisation de l'appareil, et, sur la base de ladite adaptation, ledit accessoire spécifique à l'appareil est configuré pour effectuer un contrôle de l'état de fonctionnement de l'appareil, de manière à guider automatiquement l'alimentation en énergie (4) ou en eau (11) ou l'activité (21, 22) vers un état de fonctionnement prédéterminé, et
b) identifier des signaux ou des relations entre signaux de l'appareil relié à celui-ci et des accessoires associés à son environnement opérationnel, tels que des capteurs périphériques ou d'autres accessoires similaires (1), en traçant les conditions résultant d'une utilisation normale ou incorrecte ou d'un disfonctionnement de l'appareil et, sur la base d'une telle identification, contrôler le fonctionnement de l'appareil et/ou des périphériques ou communiquer des informations concernant lesdites conditions localement ou par le biais de liaisons de transmission de données entre l'installation et des parties au choix, l'accessoire (1) étant adapté pour préparer une interface d'utilisateur capable d'effectuer un contrôle automatique en fonction des conditions ambiantes et de l'état de fonctionnement de l'appareil relié à celui-ci.

2. Système selon la revendication 1, **caractérisé en ce que** le système comprend des appareils reliés entre eux, lesquels sont capables de contrôler directement le fonctionnement les uns des autres en fonction d'informations provenant de leurs capteurs périphériques et en fonction de l'activité ou de la présence d'un utilisateur.

3. Système selon l'une quelconque des revendications 1 ou 2, **caractérisé en ce que** le système est doté de plusieurs accessoires (1) communiquant les uns avec les autres, et **en ce que** ces accessoires sont capables d'indiquer la présence ou l'activité de l'utilisateur en surveillant des changements dans les états de fonctionnement d'appareils résultant des actions d'un utilisateur.

4. Système selon l'une quelconque des revendications 1 à 3, **caractérisé en ce que** le système est doté de plusieurs accessoires (1) communiquant les uns avec les autres en comparant la consommation d'eau des appareils utilisant de l'eau et une conduite d'alimentation entière, ainsi que la présence d'utilisateurs, tout en étant capables d'indiquer une fuite, un point d'eau externe aux appareils ménagers faisant apparaître des fuites ou laissé ouvert, sur la base d'informations analysées.

5. Système selon l'une quelconque des revendications 1 à 5, **caractérisé en ce que** l'accessoire possède son détecteur sonore (9, 8) utilisé pour créer une coque de protection ou pour surveiller l'état de fonctionnement d'un appareil ou les activités des occupants.

6. Système selon l'une quelconque des revendications 1 à 5, **caractérisé en ce que** le son d'alarme standard de capteurs périphériques indépendants (17) est utilisé pour la signalisation.

7. Système selon l'une quelconque des revendications 1 à 6, **caractérisé en ce que** le suivi de la consommation d'énergie ou d'eau des appareils est effectué à l'aide d'une mesure de température.

8. Système selon l'une quelconque des revendications 1 à 7, **caractérisé en ce que** l'accessoire (1) est adapté pour mesurer des conditions ambiantes à l'aide de deux capteurs de température séparés (7 ou 12 ou 23 et 10) et pour effectuer des contrôles sur la base d'une différence de température.

9. Système selon l'une quelconque des revendications 1 à 8, **caractérisé en ce que** son interface d'utilisateur comprend un écran LCD avec son bouton de commande ou un son pilote.
